Europäisches Patentamt

European Patent Office

Office européen des brevets

(11) Publication number: **0 032 883**
**B1**

(12) **EUROPEAN PATENT SPECIFICATION**

(45) Date of publication of patent specification: **17.07.85**

(51) Int. Cl.⁴: **B 60 K 26/00, G 05 G 9/00**

(21) Application number: **81850001.9**

(22) Date of filing: **07.01.81**

(54) Operating arrangement for combined actuation of two movable control devices.

(30) Priority: **09.01.80 SE 8000172**

(43) Date of publication of application:
**29.07.81 Bulletin 81/30**

(45) Publication of the grant of the patent:
**17.07.85 Bulletin 85/29**

(84) Designated Contracting States:
**DE FR GB IT NL**

(56) References cited:
**FR-A- 846 027**
**GB-A-1 429 507**
**SE-B- 366 259**
**US-A-3 800 615**
**US-A-4 040 499**

(73) Proprietor: **Bergsjö Trima Aktiebolag**
**S-820 70 Bergsjö (SE)**

(72) Inventor: **Nyström, Ernst Olof Birger**
**Lägervägen 8**
**S-820 70 Bergsjö (SE)**

(74) Representative: **Grahn, Thomas**
**Oscar Grahn Patentbyra AB Erik Lindquist**
**Patentbyra AB P.O. Box 19540**
**S-104 32 Stockholm (SE)**

Courier Press, Leamington Spa, England.

## Description

The present invention relates to an operating arrangement for combined actuation of two movable control devices with the aid of an operating lever and movement translating members in the form of Bowden operating cables according to the precharacterizing portion of claim 1.

In many cases it is desirable to carry out two coordinated control operations with the aid of a single operating lever. The control devices can consist in such a case of hydraulic valves for controlling pressure cylinders. In other cases, the operating arrangement can be directly mechanically connected to a combined selector/switching means or be arranged to control a hydraulic transmission.

US—A—3 800 615 discloses a control mechanism for combined operation of two valve elements. The mechanism comprises a pivot plate inclinable in various directions about a central turning point through a single operating lever secured to the pivot plate. Movement translating members in the form of pull-push cables connect the pivot plate with the valve elements. Each cable is acting as a separate motion translating member for pushing and pulling the connected valve element into desired positions.

FR—A—846 027 is illustrating various arrangements of flexible Bowden cables for displacement of an object. The object may be moved either by sheer pulling action through the cable wire or by pushing action through the cable casing, in which latter case pressure is generated in the casing when the cable wire is subjected to tension.

Operating arrangements with pull-push cables work satisfactorily per se, but have certain disadvantages. These disadvantages are essentially connected with the fact that the wires of the pull-push operating cables, as well as the casings thereof, must be made relatively heavy to permit power transmission by compression. In many cases, this results in troublesome problems when laying out the cables, since the bending radii of the cables must be relatively large to avoid great friction when moving the wire inside the casing, which results in the need of large operating force. In many cases, the operating cables can thus constitute unnecessary large and expensive elements in the structure. Furthermore, a pull-push cable will necessarily have unloaded bearing surfaces at the connection points of the wire in certain positions, which has been found to be a very large drawback in heavily vibrating structures. As a result of mechanical action on the bearing surfaces, troublesome play can namely occur at the connection points.

A single light Bowden cable on the other hand can not be used for positive power translation in two directions, as a counteracting force has to be applied in one of said directions for returning the object. This is a disadvantage.

The present invention has the object of providing an operating arrangement of the kind set forth in the introduction, without the disadvantages burdening such known arrangements. The new operating arrangement will thus allow flexible and pliable placing of the operating cables in constructions of varying appearance, e.g. front loaders and similar machines, will enable the use of relatively light and cheap operating cables and will not be affected by vibrations during the operation of the machine. The operating device itself, with its associated single lever will constitute an easily installable, closed unit of robust construction and small dimensions.

The inventive concept is realized by an arrangement with the distinguishing features disclosed in the characterizing portion of claim 1.

Of basic importance for the invention is that the operating arrangement always works with tension in the wires of the operating cables and that said wires can always be kept under controlled pretension for avoiding play at the connection points. Relatively light operating cables having low inner friction and good ability to suit the construction where they are used are hereby enabled.

The invention will now be described in the form of working examples while referring to the accompanying drawings.

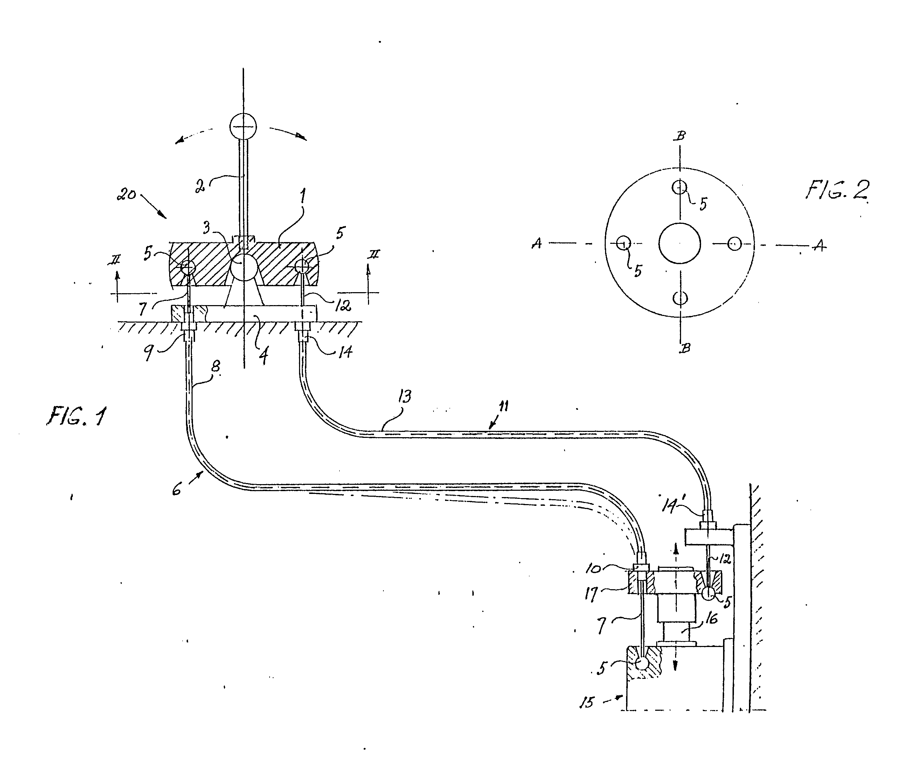

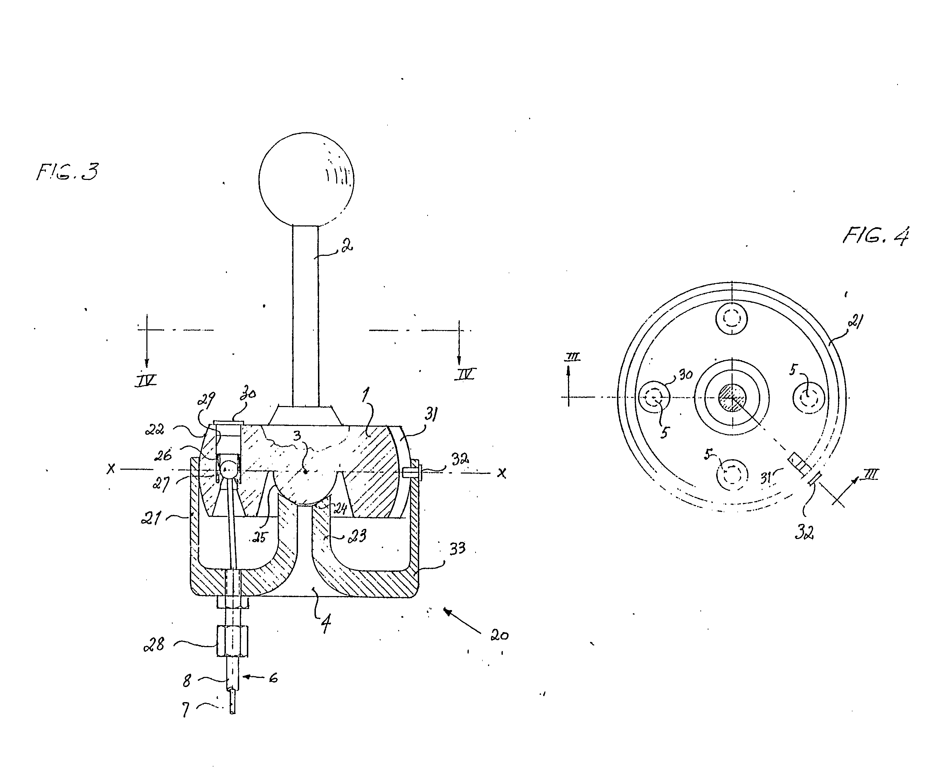

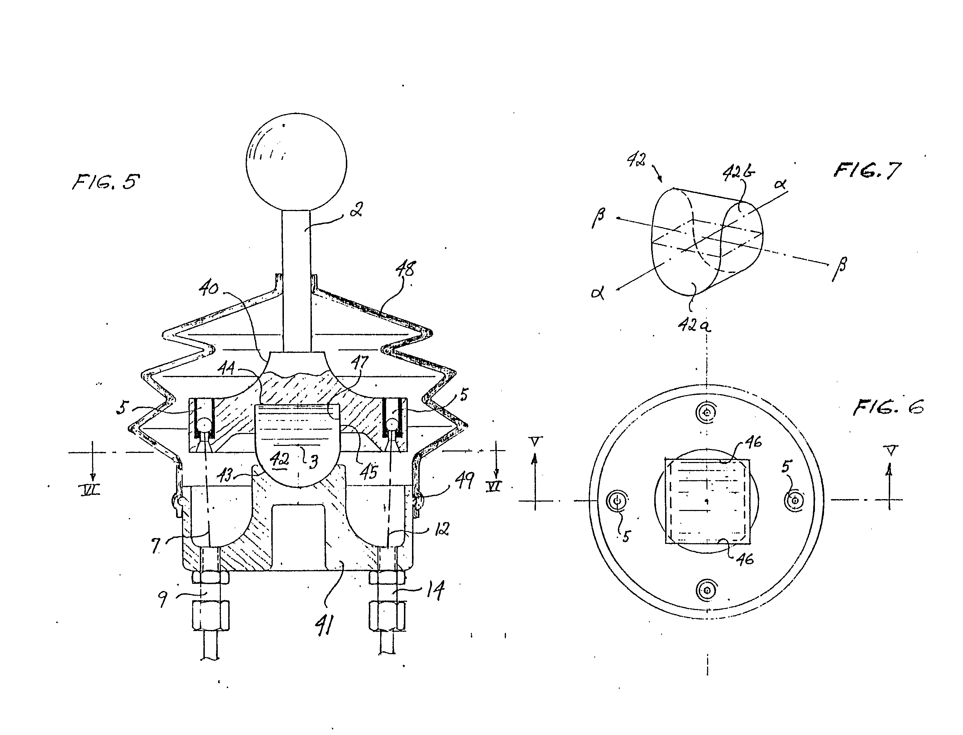

Figure 1 schematically illustrates an operating arrangement in accordance with the invention. Figure 2 is a view of the operating device pivot plate taken along the line II—II in Figure 1. Figure 3 illustrates a preferred embodiment of the operating device in a longitudinal section along the line III—III in Figure 4. Figure 4 is a view of the operating device from the line IV—IV in Figure 3. Figures 5—7 illustrate a further preferred embodiment of the operating device, where Figure 5 is a longitudinal section along the line V—V in Figure 6. Figure 6 is a view of the operating device in Figure 4 taken along the line VI—VI, with the pivot plate removed. Figure 7 is a perspective view of the mounting member of the embodiment illustrated in Figure 5.

Figure 1 illustrates an operating device generally denoted by the numeral 20, which is connected for operation of a control means generally denoted by the numeral 15, e.g. a hydraulic valve. The hydraulic valve has a control device 16 in the form of a cylinder piston. The piston has rectilinear reciprocating travel in accordance with the double arrow shown on the figure. The control means 15 is mounted on a rigid substructure not more closely illustrated, e.g. the frame of a front loader or similar machine.

The operating device 20 has a base plate 4 similarly mounted on a rigid substructure not more closely shown, and constituting a part of the work machine frame. Upstanding from the base plate 4 there is a pillar terminated by a spherical surface, the centre of which is denoted by 3. The spherical surface forms the rigid bearing surface of a ball joint, the coacting movable bearing surface of which is formed on a pivot plate 1. The pivot plate is upwardly and downwardly defined by generally flat parallel surfaces. Upwards in the figure, the pivot plate is provided with an operating lever 2 terminated by a gripping knob. With the aid of the lever, the plate 1 can be adjusted to any desired inclination in any direction around the central point 3 of the ball joint.

Two Bowden operating cables 6 and 11 are connected between the operating device 20 and control means 15 in the plane of the drawing. In Figure 2 this plane is denoted by A—A. The cable 6 is conventionally made with a wire 7 surrounded by a casing 8. The wire 7 is pivotably connected to the pivot plate 1 at the connection point 5 and pivotably connected to a fixed portion of the control means 15 at a similar connection point 5. The casing 8 is rigidly connected to the base plate 4 at 9 via an adjusting nipple, and at its opposite end is connected to the movable head 17 of the control device 16 at 10 via a similar nipple.

The cable 11 is similarly conventionally made as a Bowden cable with a wire 12 and a surrounding casing 13. The wire 12 is pivotably connected to the pivot plate 1 at the connection point 5 and at its other end is similarly connected to the head 17 of the control device 16 at the connection point 5. One end of the casing 13 is rigidly connected to the base plate via an adjusting nipple at 14, with its other end 14' similarly connected to the substructure carrying the control means 15.

In a corresponding mode, there are a further pair of operating cables arranged for activating a further control means, said cables being connected to the operating device 20 in a plane B—B at right angles to the plane of the drawing. It will be observed that both the illustrated control means 15 and the further control means do not need to lie in either of the planes A—A or B—B but can have optional location relative to these planes through the operating device 20.

The relative positions of the operating device 20 and the control device 16 are conventionally set by adjusting the active length of the cables, a desired light pretension of the wires being simultaneously set with the aid of the adjusting nipples provided for the casings, the effective length of the casings being thus adjusted. By means of said pretension, the pivot plate 1 will be constantly pressed against the central spherical bearing surface while retaining movability and location, without further location means being required.

The arrangement works in the following mode, one control means with associated cables being primarily observed. When the operating lever 2 is pushed anticlockwise in the plane of the paper, there is an increased pull in the wire 12, causing the control device 16 to be pulled upwards in the figure. Since both connection points 5, 5 are on a common line through the turning point 3 for the pivot plate, and at equal distances therefrom, the wire 7 in the Bowden cable 6 will be displaced inwards in the cable at 9 and pulled out of the cable a corresponding distance at 10, due to the travel of the control device 16 relative the wire 7 which is immovably connected to the control means 15. The portion of the cable 6 nearest the control device 16 will naturally follow the movement of the control device and thus be moved upwards in the figure.

When the operating lever 2 is swung clockwise in the plane of the figure, the wire 7 is stretched in the cable 6, giving rise to compressive stress in the casing 8. This compressive stress results in a pressure downwards against the control device 16 and corresponding displacement thereof in the direction of the arrow downwards in the figure. The cable 6 assumes a downwardly displaced position as illustrated by chain-dotted lines in Figure 1. The wire 12 of the cable 11 is pulled downwards by the control device 16 to accompany the inclining motion of the pivot plate 1. The cable retains its position unaltered.

A corresponding sequence occurs when swinging the operating lever 2 in the plane B—B. The distance between the connection points 5—5 of the cables on the pivot plate 1 and the central turning point 3 must be commonly equal in this case as well, but can be different from corresponding distances in the plane A—A, depending on what displacement in respect of the control device is required in relation to the desired angle of inclination of the pivot plate in the respective planes. For practical reasons, the distances in question are all kept the same in both A and B planes.

In the illustrated example, the control means is a hydraulic valve with a rectilinearly movable valve piston. It will be seen that a corresponding connection of the operating cables is possible for a control device which does not have rectilinear movement, but some form of turning movement. The control device can, for example, be provided with a pivotable arm with the operating cables connected to the free end of the arm. These cables can also be connected to a curved plate for controlling a regulation means or any other regulation means having reciprocatory motion.

Figures 3 and 4 illustrate a preferred embodiment of the operating device 20. The pivot plate 1 is formed on its underside with a spherical surface 25 concentric with the turning point 3. In coaction with a fixed bearing suface 24, there is formed a ball joint for optional inclination of the pivot plate about the turning point 3. The bearing surface 24 is incorporated in a housing 33 with a cylindrical sleeve-shaped wall 21. The axis of the cylindrical housing passes through the point 3. The pivot plate 1 is defined by a spherical circumferential surface 22 concentric with the turning point 3, and which is glidably engaged against the inner cylindrical surface of the wall 21. The wall 21 extends somewhat above a plane at right angles to the cylinder axis through the point 3. In this way, the pivot plate is given an effective axial and radial mounting, with freedom to assume every desired position of inclination. Since the spherical circumferential surface 22 of the pivot plates glidably engages against the inner surface of the wall 21, the underside of the pivot plate with the ball joint will be effectively enclosed in the downwardly closed housing 33.

To maintain the angular attitude of the pivot plate 1 relative the intersection line between the sloping planes A—A and B—B, i.e. about the longitudinal axis of the cylindrical housing 33, a groove 31 is made on the pivot plate's spherical circumferential surface 22. The groove extends in a diametral plane through the turning point 3 and at right angles to the pivot plate's plane of action, i.e. a plane through the point 3 and the connection points 5 for the cable wires. This plane is denoted by x—x in Figure 3. A suitable cylindrical guide pin 32 engages glidably in this groove, the pin being attached to the housing wall 21 at a level with the contact line between the circumferential surface 22 and the inner wall surface of the guide sleeve. As will be seen from Figure 4, the groove 31 is suitably arranged between two of the Bowden cable wire connection points 5.

Figure 3 shows in better detail the appearance of the mounting at the connection point 5 of the wire 7, said mounting being executed in the same way for all the cable wires. The wire 7 is terminated in the plane x—x by a ball 27, which is suitably attached to the wire. The ball 27 is accommodated in a bushing 26 provided with a through-bore having a downward shoulder serving as a bearing surface. The bushing 26 is accommodated in an axial through-bore 29 in the pivot plate, said bore similarly having a downward shoulder against which the bushing 26 engages. Upwardly, the bore 29 is closed by a plug 30. Since the bore 29 downwardly opens out into the inner closed chamber of the housing 33, the mounting at the connection point 5 will be completely closed off to the outside.

The illustrated cable 6 is connected to the housing 33 by means of a nipple. This nipple has an adjusting nut 28, with the help of which the effective length of the casing 8 can be regulated for setting the desired pretension in the cable wire. Similar nipples are arranged at the opposite ends of the cables at the control device, although the cable wires are not necessarily mounted in ball joints, but can be connected conventionally with the possibility of length adjustment. By suitable pretension of the cable wires, the pivot plate will always be retained in the mounting position in the housing 33 without further axial locating means. The operating device 20 can be attached to a suitable substructure by screws engaging from the underside in the bottom wall (not shown) of the housing.

The embodiment of the pivot plate 1 and housing 33 enables simple manufacture of these details by diecasting or compression moulding for example, and both or either can be made in a suitable plastics material or other suitable material.

Alternatively, the pivot plate can be made in the form of a substantially unbroken sphere enclosed in a parted housing with corresponding spherical bearing surfaces. The mountings for the cable wires are then let into grooves in the surface of the sphere, and the wires extend tangentially towards the connection points. When the sphere is turned, the cable wires come into diametrical grooves in the surface of the sphere.

Figures 5—7 illustrate a further preferred embodiment of the operating device. Parts on these figures which are similar to those on Figures 3 and 4 are provided with the same reference numerals.

As will be seen from Figure 5, the pivot plate 40 is in this case mounted on the housing 41 above a mounting member 42. As previously the pivot plate is connected to two pairs of cables in planes mutually at right angles. The connection points 5 of the wires 7, 12 are arranged in the same way on the pivot plate as with the previously described embodiment, a ball attached to the respective wire being mounted in a bushing. The cable casings are connected to the housing 41 by means of nipples 9, 14 so that the relative positions of the operating device can be set by adjusting the active length of the cables for a desired pretensioning of the wires. The effective lengths of the casings can be thus adjusted so that the pivot plate 40 above the mounting member 43 will be pressed against the housing 41.

To retain the angular attitude of the pivot plate 40 about the intersection line between the planes through the respective pair of operating cables, i.e. the planes in which corresponding pairs of connection points 5 are moved during movement of the pivot plate, the mounting member 42 is formed with guide surfaces allowing pivoting of the pivot plate about the turning point 3 solely about two axes α—α and β—β mutually at right angles and passing through said turning point 3. With this object, the mounting member 42 is formed as will be seen in detail in Figure 7. The mounting member comprises a downward portion 42a having a semi-cylindrical shape, with an upper portion 42b of like semi-cylindrical shape merging therewith. The portion 42a has its axis coinciding with said pivoting axis α—α and the portion 42b has its axis coinciding with said pivoting axis β—β. These axes intersect at the centre of the mounting member, which thus coincides with the turning point 3 of the pivot plate. The lower and upper portions 42a and 42b of the mounting member are defined by end surfaces 45 at right angles to respective axes.

Bearing surfaces adapted to the mounting member on the pivot plate 40 and housing 41 enable pivoting the pivot plate 40 about either of the axes α—α or β—β and pivoting the plate together with the mounting member about the other of said axes. The end surfaces 45 of the mounting member glidably bear against bearing surfaces 47 and 46 on the pivot plate and housing, respectively.

It will be appreciated that the mounting member 42 will in this way guide the pivot plate relative to the housing so that the pivot plate can assume any desired angular position while retaining angular position about its own axis and that of the housing, these axes always intersecting at the turning point 3. In this situation the pivot plate is always kept under suitably adapted bearing pressure against the mounting member 42 and housing 41 in an unaltered attitude relative to the turning point 3, which is ensured by the tension set in the cable wires.

The pivot plate 40 and housing 41 in this embodiment can be manufactured to advantage as diecast metallic details while the mounting member 42 is manufactured in plastics material with suitable bearing properties.

The operating device is enclosed to advantage in a flexible sealing bellows 48 of conventional manufacture. The bellows is suitably connected to the outside of the housing and is retained by a bead 49 along the outer periphery of the housing. At its upper end, the bellows is a tight fit round the operating lever 2. The operating device will thus be effectively protected against the action of moisture, dust or the like from its surroundings.

## Claims

1. Operating arrangement for combined actuation of two movable control devices (16, 16), comprising a pivot plate (1) inclinable in all directions about a central turning point (3) by means of an operating lever (2) secured to said pivot plate (1) and movement translation members (6, 11) in the form of Bowden operating cables connected to the pivot plate and the control devices, characterized in two pairs of operating cables (6, 11) connected to the pivot plate (1) in two diametral planes (A—A; B—B) at substantially right angles through the turning point (3), said cables having diametrically opposing connection points (5) in each pair at equal distances from the turning point (3), one end of the casing (13) of a first cable (11) in each pair being connected to a fixed means (14) adjacent the pivot plate (1) with the associated wire (12) projecting towards the pivot plate being pivotably connected (5) to the pivot plate while the opposite end of the casing (13) is connected to a fixed means (14') adjacent the control device (16) and the associated wire (12) projecting towards the said device is pivotably connected to the control device so as on operation to actuate the control device in one direction by pulling, and one end of the casing (8) of the second cable (6) of the pair being connected to a fixed means (9) adjacent the pivot plate (1) with the associated wire (7) projecting towards the pivot plate being pivotably connected (5) to the pivot plate while the opposite end of the casing (8) is connected to the control device (16) and the associated wire (7) projecting from said casing is connected to a fixed means (5) adjacent the control device, so as on reverse operation to actuate the control device (16) in the reverse direction by generating pressure in the casing (8) of said second cable (6).

2. Operating arrangement as claimed in claim 1, characterized in that the coupling portion of the control device has rectilinear travel.

3. Operating arrangement as claimed in claim 1, characterized in that the coupling portion of the control device has arcuate travel.

4. Operating arrangement as claimed in claim 1, characterized in that the pivot plate (1) is centrally mounted at a ball joint (24, 25) for inclination about the turning point (3).

5. Operating arrangement as claimed in claims 1 and 4, characterized in that the pivot plate (1) is defined by a spherical peripheral surface (22) concentric with the central turning point (3), said surface being glidably accommodated in a fixed cylindrical guiding sleeve (21), constituting a portion of a housing (33) partially surrounding the pivot plate, said housing having a fixed interior bearing surface (24) pertaining to the ball joint, and fixed connection means (9, 14) for the casings of the operating cables.

6. Operating arrangement as claimed in claim 5, characterized in that the spherical peripheral surface (22) of the pivot plate (1) has a guiding groove (31) in a diametral plane at right angles to the plane of action (x—x) of the pivot plate, a guide pin (32) fixed in the guiding sleeve (21) engaging in said groove at the line of contact between the surface (22) and the inner cylindrical surface of the guiding sleeve.

7. Operating arrangement as claimed in claim 1, characterized in that the pivot plate is spherically formed and enclosed in a parted housing with corresponding bearing surfaces, the connection points (5) of the cable wires lying in grooves along the surface of the sphere in the mutually right-angular diametral planes (A—A; B—B) and in that the wires (7, 12) extend tangentially to these grooves and when the sphere is pivoted or inclined they are accommodated in the grooves.

8. Operating arrangement as claimed in claim 1, characterized in that the pivot plate (40) is mounted on a housing (41) above a mounting member (42) allowing oscillation of the pivot plate about a first axis extending through the turning point (3) and also oscillation of the pivot plate with the mounting member about a second axis through the turning point (3) substantially at right angles to said first axis.

9. Operating arrangement as claimed in claim 8, characterized in that the mounting member (42) is formed by two semicylindrical portions (42a, 42b) merging into each other, the axes of said portions intersecting each other substantially at right angles at the turning point (3), the cylindrical surfaces constituting bearing surfaces against the pivot plate (40) and housing (41).

10. Operating arrangement as claimed in claim 9, characterized in that the end surfaces (45) of the semi-cylindrical portions (42a, 42b) form axial bearing surfaces against the pivot plate (40) and housing (41).

11. Operating arrangement as claimed in any of the forgoing claims, characterized in that the portion of the second cable (6) situated closest to the control device (16) is displaceable to varying positions according to the travel of the control device (16).

## Revendications

1. Dispositif de commande pour l'actionnement combiné de deux moyens de commande mobiles (16, 16), comportant un plateau oscillant (1) pouvant être incliné dans toutes les directions autour d'un point de pivotement central (3) au moyen d'un levier de commande (2) solidarisé au plateau oscillant (1), et des organes (6, 11) de transmission de mouvement sous la forme de câbles de commande Bowden reliés au plateau oscillant et aux moyens de commande, caractérisé en ce que deux paires de câbles de commande (6, 11) sont reliées au plateau oscillant (1) dans deux plans diamétraux (A—A; B—B) qui passent par le point de pivotement (3) en se coupant sensiblement à angle droit, les câbles de chaque paire ayant des points de liaison (5) diamétralement opposés, à égales distances du point de pivotement (3), une extrémité de la gaine (13) d'un premier câble (11) de chaque paire étant reliée à des moyens fixes (14) adjacents au plateau oscillant (1) avec le fil (12) associé s'étendant en direction du plateau oscillant relié, de façon pivotante (5), au plateau oscillant, tandis que l'extrémité opposée de la gaine (13) est reliée à des moyens fixes (14') adjacents aux moyens de commande (16), et le fil associé (12) s'étendant en direction de ces moyens est relié de façon pivotante aux moyens de commande (16), de sorte qu'une manoeuvre actionne ces moyens de commande dans une direction, par traction, et une extrémité de la gaine (8) du deuxième câble (6) de la paire étant reliée à des moyens fixes (9) adjacents au plateau oscillant (1), avec le fil associé (7) s'étendant en direction du plateau oscillant relié de façon pivotante (5), au plateau oscillant, tandis que l'extrémité opposée de la gaine (8) est reliée aux moyens de commande (16), et que le fil associé (7) dépassant de cette gaine est relié à des moyens fixes (5) adjacents aux moyens de commande, de sorte qu'une manoeuvre inverse actionne les moyens de commande (16) dans la direction opposée en produisant une poussée sur la gaine (8) du deuxième câble (6).

2. Dispositif de commande selon la revendication 1, caractérisé en ce que la partie d'accouplement des moyens de commande possède une course rectiligne.

3. Dispositif de commande selon la revendication 1, caractérisé en ce que la partie d'accouplement des moyens de commande possède une course arquée.

4. Dispositif de commande selon la revendication 1, caractérisé en ce que le plateau oscillant (1) est monté centralement sur un joint à rotule (24, 25) permettant de l'incliner autour du point de pivotement (3).

5. Dispositif de commande selon les revendications 1 et 4, caractérisé en ce que le plateau oscillant (1) est délimité par une surface périphérique sphérique (22) concentrique au point de pivotement central (3), cette surface étant reçue à coulissement dans un manchon de guidage (21) cylindrique fixe constituant une partie d'un logement (33) entourant partiellement le plateau oscillant, ce logement ayant une surface de portée intérieure fixe (24) appartenant au joint à rotule, et des moyens de liaison fixes (9, 14) pour les gaines des câbles de commande.

6. Dispositif de commande selon la revendication 5, caractérisé en ce que la surface périphérique sphérique (22) du plateau oscillant (1) possède une rainure de guidage (31) dans un plan diamétral situé à angle droit du plan d'action (x—x) du plateau oscillant, un doigt de guidage (32) fixé dans le manchon de guidage (21) pénétrant dans cette rainure à l'endroit de la ligne de contact entre la surface (22) et la surface cylindrique intérieure du manchon de guidage.

7. Dispositif de commande selon la revendication 1, caractérisé en ce que le plateau oscillant est doté d'une configuration sphérique et est enclos dans un logement à plusieurs parties, ayant des surfaces de portée correspondantes, les points de liaison (5) des fils de câble se trouvant dans des rainures le long de la surface de la sphère dans les plans diamétraux mutuellement à angle droit (A—A; B—B), et en ce que les fils (7, 12) s'étendent tangentiellement à ces rainures dans lesquelles ils sont reçus lorsque la sphère est déplacée par pivotement ou inclinaison.

8. Dispositif de commande selon la revendication 1, caractérisé en ce que le plateau oscillant (40) est monté sur un logement (41), au-dessus d'un organe de montage (42) autorisant l'oscillation du plateau oscillant autour d'un premier axe passant par le point de pivotement (3), et autorisant aussi l'oscillation du plateau oscillant avec l'organe de montage, autour d'un deuxième axe passant par le point de pivotement (3), sensiblement à angle droit par rapport au premier axe.

9. Dispositif de commande selon la revendication 8, caractérisé en ce que l'organe de montage (42) est formé par deux parties semicylindriques (42a, 42b) se raccordant l'une à l'autre, les axes de ces parties se coupant sensiblement à angle droit, au point de pivotement (3), les surfaces cylindriques constituant des surfaces de portée contre le plateau oscillant (40) et le logement (41).

10. Dispositif de commande selon la revendication 9, caractérisé en ce que les surfaces terminales (45) des parties semicylindriques (42a, 42b) forment des surfaces de portée axiale contre le plateau oscillant (40) et le logement (41).

11. Dispositif de commande selon l'une quelconque des revendications précédentes, caractérisé en ce que la partie du deuxième câble (6) qui est la plus proche des moyens de commande (16) peut être déplacée à des positions variables selon le déplacement des moyens de commande (16).

**Patentansprüche**

1. Bedienungseinrichtung für die kombinierte Betätigung von zwei beweglichen Regeleinrichtungen (16, 16), die eine in alle Richtungen um einen zentralen Schwenkpunkt (3) mittels eines Bedienungshebels (2) neigbare, an letzterem gesicherten Schwenkplatte (1) und Bewegungs- übertragungsglieder (6, 11) in Form von Bowdenzügen umfassen, die mit der Schwenkplatte und den Regeleinrichtungen verbunden sind, dadurch gekennzeichnet, daß zwei Paar Kabelzüge (6, 11) mit der Schwenkplatte (1) in zwei diametralen Ebenen (A—A; B—B) unter hauptsächlich rechten Winkeln durch den Schwenkpunkt (3) verbunden sind, die genannten Kabelzüge diametral gegenüberliegende Verbindungspunkte (5) in jedem Paar bei gleichen Abständen von dem Schwenkpunkt (3) aufweisen, ein Ende der Mantelhülle (13) eines ersten Kabelzuges (11) in jedem Paar mit einem festen Mittel (14) verbunden ist, welches an die Schwenkplatte (1) mit dem entsprechend zugeordneten Seilzug (12) angrenzt, der in Richtung auf die Schwenkplatte vorragt und gelenkig mit der Schwenkplatte verbunden (5) ist, während das entgegengesetzte Ende der Mantelhülle (13) mit einem festen Mittel (14') verbunden ist, welches an die Regeleinrichtung (16) angrenzt und der entsprechend zugeordnete Seilzug (12) in Richtung auf die genannte Regeleinrichtung vorragt und gelenkig mit der Regeleinrichtung so verbunden ist, um beim Betrieb die Regeleinrichtung in einer Richtung durch Zugkraft zu betätigen und ein Ende der Mantelhülle (8) des zweiten Kabelzuges (6) des Paares mit einem befestigten Mittel (9) verbunden ist, welches an die Schwenkplatte (1) mit dem entsprechend zugeordneten Seilzug (7) angrenzt, der in Richtung auf die Schwenkplatte vorragt und gelenkig mit der Schwenkplatte verbunden (5) ist, während das entgegengesetzte Ende der Mantelhülle (8) mit der Regeleinrichtung (16) verbunden ist und der entsprechend zugeordnete, aus der genannten Mantelhülle vorragende Seilzug (7) mit einem festen Mittel (5) verbunden ist, welches an die Regeleinrichtung so angrenzt, um bei umgekehrtem Betrieb die Regeleinrichtung (16) in umgekehrter Richtung durch Druckerzeugung in der Mantelhülle (8) des genannten zweiten Kabelzuges (6) zu betätigen.

2. Bedienungseinrichtung nach Anspruch 1, dadurch gekennzeichnet, daß das Kupplungsteil der Regeleinrichtung eine geradlinige Arbeitsbewegung aufweist.

3. Bedienungseinrichtung nach Anspruch 1, dadurch gekennzeichnet, daß das Kupplungsteil der Regeleinrichtung eine bogenförmige Arbeitsbewegung aufweist.

4. Bedienungseinrichtung nach Anspruch 1, dadurch gekennzeichnet, daß die Schwenkplatte (1) zur Neigung um den Schwenkpunkt (3) zentral auf einer Kugellagerverbindung (24, 25) gelagert ist.

5. Bedienungseinrichtung nach den Ansprüchen 1 und 4, dadurch gekennzeichnet, daß die Schwenkplatte (1) durch eine kugelförmige, konzentrisch zum zentralen Schwenkpunkt (3) verlaufende Außenumfangsfläche (22) begrenzt ist, die gleitend in einer festen zylindrischen Führungshülse (21) untergebracht ist, die einen Teil eines Gehäuses (33) bildet, welches die Schwenkplatte teilweise umgibt, wobei das genannte Gehäuse eine feste innere Lagerfläche (24) bezüglich der Kugellagerverbindung und feste Verbindungsmittel (9, 14) für die Mantelhüllen der Kabelzüge aufweist.

6. Bedienungseinrichtung nach Anspruch 5, dadurch gekennzeichnet, daß die kugelförmige Außenumfangsfläche (22) der Schwenkplatte (1) eine Führungsnut (31) in einer diametral zu der Ebene der Betätigung (x—x) der Schwenkplatte unter rechten Winkeln verlaufende Ebene einen Führungsstift (32) aufweist, der in der Führungshülse (21) befestigt ist und in die genannte Führungsnut an einer Berührungslinie zwischen der Außenumfangsfläche (22) und der inneren zylindrischen Oberfläche der Führungshülse eingreift.

7. Bedienungseinrichtung nach Anspruch 1, dadurch gekennzeichnet, daß die Schwenkplatte kugelförmig ausgebildet und in einem geteilten Gehäuse mit übereinstimmenden Kugellagerflächen eingeschlossen ist, wobei die Verbindungspunkte (5) der Kabelzüge in Nuten entlang der Oberfläche der Kugel in zueinander rechtwinkligen, diametralen Ebenen (A—A; B—B) liegen und in der die Seilzüge (7, 12) sich tangential zu diesen Nuten erstrecken und in den Nuten aufgenommen werden, wenn die Kugel verschwenkt oder geneigt wird.

8. Bedienungseinrichtung nach Anspruch 1, dadurch gekennzeichnet, daß die Schwenkplatte (40) oberhalb eines Gehäuses (41) auf einem Lagerkörper (42) gelagert ist, der eine Schwenkung der Schwenkplatte um eine erste Achse gestattet, die sich durch den Schwenkpunkt (3) erstreckt, und auch eine Verschwenkung der Schwenkplatte mit dem Lagerkörper um eine zweite Achse durch den Schwenkpunkt (3) unter hauptsächlich rechten Winkeln zu der genannten ersten Achse erlaubt.

9. Bedienungseinrichtung nach Anspruch 8, dadurch gekennzeichnet, daß der Lagerkörper (42) aus zwei halbzylindrischen Teilen (42a, 42b) gebildet ist, die miteinander verschmelzen, wobei die Achsen der genannten Teile sich einander unter hauptsächlich rechten Winkeln im Schwenkpunkt (3) kreuzen und die zylindrischen Flächen Lagerflächen gegen die Schwenkplatte (40) und das Gehäuse (41) bilden.

10. Bedienungseinrichtung nach Anspruch 9, dadurch gekennzeichnet, daß die Stirnflächen (45) der halbzylindrischen Teile (42a, 42b) axiale Lagerflächen gegen die Schwenkplatte (40) und das Gehäuse (41) bilden.

11. Bedienungseinrichtung nach einem der vorhergehenden Ansprüche, dadurch gekennzeichnet, daß das der Regeleinrichtung (16) nächstgelegene Teil des zweiten Kabelzuges (6) in verschiedene Positionen gemäß der Arbeitsbewegung der Regeleinrichtung (16) verschiebbar ist.

FIG. 1

FIG. 2

0 032 883

FIG.3

FIG.4

0 032 883

FIG. 5

FIG. 7

FIG. 6

0 032 883